# EUROPÄISCHE PATENTSCHRIFT

(11) **EP 2 398 144 B1**
(45) Veröffentlichungstag und Bekanntmachung des Hinweises auf die Patenterteilung: **05.09.2018**
(21) Anmeldenummer: 11167248.1
(22) Anmeldetag: 24.05.2011
(51) Int. Cl.: H02P 29/032, H02P 7/28, H02P 29/02

(54) **Motorsteuerung**
Motor control
Commande de moteur

(30) Priorität: 16.06.2010 DE 102010030153
(43) Veröffentlichungstag der Anmeldung: 21.12.2011
(73) Patentinhaber: Robert Bosch GmbH, 70442 Stuttgart (DE)
(72) Erfinder: Lurk, Volker, 77652, Offenburg (DE); Haberl, Nikolas, 76547, Sinzheim (DE); Fischer, Frank, 77815, Buehl (DE); Poddey, Christian, 76470, Oetigheim (DE); Stiefel, Tobias, 76534, Baden-Baden (DE); Koerner, Michael, 77815, Buehl (DE)

(56) Entgegenhaltungen:
- WO-A1-2004/086601
- DE-A1- 10 326 785
- DE-A1- 19 901 708
- GB-A- 2 247 999
- US-A- 5 877 604
- US-A1- 2006 066 276

## Beschreibung

### Stand der Technik

Ein Elektromotor, wie er beispielsweise in einem Kraftfahrzeug verwendet wird, kann einem Verschleiß und ungünstigen Betriebsbedingungen ausgesetzt sein, so dass der Elektromotor im Laufe seiner Betriebszeit schwergängig wird. Eine Schwergängigkeit kann beispielsweise durch einen Fremdkörper im Bereich des Elektromotors oder durch verschlissene Rotationslager begründet sein. Im Unterschied zu einer Blockade des Elektromotors kann der Elektromotor bei Schwergängigkeit unter Umständen noch ein gewisse Zeit lang verwendet werden. Allgemein ist jedoch bei Schwergängigkeit eine Instandsetzung des Elektromotors erforderlich, so dass es von Vorteil ist, die Schwergängigkeit rechtzeitig zu erfassen.

Ein schwergängiger Elektromotor kann diagnostiziert werden, wenn ein Verhältnis aus einer vom Elektromotor aufgenommenen Leistung und einer Drehzahl des Elektromotors außerhalb eines vorbestimmten Bereichs liegt. Eine derartige Messung ist jedoch aufwändig, da ein Drehzahlsensor erforderlich ist. Darüber hinaus können Fehlmessungen durch unterschiedliche Belastungszustände des Elektromotors entstehen. Die Patentschrift DE-103.26.785-A1 beschreibt das Bestimmen der Schwergängigkeit eines elektrischen Motors durch Vergleich von gemessener Motorspannung und Motorstrom mit gespeicherten Strom/Spannungskennlinien (parameterabhängig). Wenn die Werte außerhalb eines Toleranzfensters liegen, so wird eine Schwergängigkeit oder Blockade angenommen und über einen Systembus weiteren Systemkomponenten mitgeteilt. Die Strom/Spannungskennlinien werden in einer Initialisierungsphase aufgenommen und während des normalen Betriebs aktualisiert, wenn die gemessenen Werte innerhalb eines Toleranzfensters liegen.

Die Patentschrift DE-199.01.708-A1 beschreibt das Bestimmen der Schwergängigkeit eines elektrischen Motors, wenn nach Abschalten des Motors ein bestimmter Drehzahlabfall (in einer Messzeit) überschritten wird. Abschalten und Bestimmen des Drehzahlabfalls erfolgt regelmäßig. Wird die Schwergängigkeit mehrmals hintereinander festgestellt, wird der Motor endgültig ausgeschaltet.

Der Erfindung liegt die Aufgabe zugrunde, ein Verfahren zur Bestimmung einer Schwergängigkeit eines Elektromotors und eine Steuereinrichtung für einen Elektromotor bereitzustellen, wobei auf einfache und zuverlässige Weise eine Schwergängigkeit des Elektromotors bestimmt wird.

### Offenbarung der Erfindung

Die Erfindung löst dieses Problem durch ein Verfahren mit den Merkmalen des Anspruchs 1 und durch eine Steuereinrichtung mit den Merkmalen des Anspruchs 10. Unteransprüche geben jeweils bevorzugte Ausführungsformen an.

In einem Verfahren zur Bestimmung einer Schwergängigkeit eines Elektromotors wird der Elektromotor abgeschaltet, falls eine Stromaufnahme des laufenden Elektromotors einen vorbestimmten Stromwert übersteigt. Nach dem Abschalten wird eine Abfallgeschwindigkeit der Drehzahl des Elektromotors bestimmt. Liegt die Abfallgeschwindigkeit unterhalb eines vorbestimmten Schwellenwerts, so wird der Stromwert um einen Betrag erhöht, andernfalls wird die Schwergängigkeit des Elektromotors bestimmt.

Auf diese Weise kann einfach und zuverlässig zwischen einer Schwergängigkeit des Elektromotors und einer Überschreitung des Stromwerts aufgrund von Toleranzen oder Messfehlern einer Messvorrichtung unterschieden werden. Durch das Bestimmen des den Elektromotor abbremsenden Moments nach dessen Abschalten ist eine hochgenaue Strommessung nicht erforderlich, was zu einer vereinfachten und kostengünstigen Vorrichtung beitragen kann.

Die Schwergängigkeit des Elektromotors kann auch auf der Basis einer Abschaltung des Elektromotors aus einem anderen Grund erfolgen. Dadurch kann eine Messhäufigkeit erhöht sein, wodurch eine genauere Bestimmung der Schwergängigkeit möglich ist.

Vorzugsweise wird die Abfallgeschwindigkeit auf der Basis eines Verlaufs einer durch den Elektromotor generierten Spannung bestimmt. Ist der Elektromotor abgeschaltet, so wird ihm keine Betriebsspannung mehr zugeführt. Der Elektromotor dreht sich aufgrund seiner Rotationsmasse noch eine weiter, bis er durch Reibungskräfte zum Stillstand abgebremst ist. Dabei wirkt er als Generator, so dass an seinen Betriebsspannungsklemmen eine auf die Drehzahl des Elektromotors hinweisende Spannung anliegt. Durch Messen dieser Spannung kann auf die Drehzahl des Elektromotors geschlossen werden. Ein diskreter Drehzahlsensor, beispielsweise mittels einer Lichtschranke oder eines Hall-Sensors, kann so eingespart werden. Dadurch kann das Verfahren auch an einem bestehenden Elektromotor ohne dedizierten Drehzahlsensor verwendet werden.

Die Abfallgeschwindigkeit kann auf der Basis einer Differenz zeitlich versetzter Werte bestimmt werden, die auf die Drehzahl des Elektromotors hinweisen. Mit anderen Worten, anstelle einer Bestimmung von absoluten Drehzahlwerten können relative Drehzahlwerte bestimmt werden. Dadurch wird eine Bestimmung der Abfallgeschwindigkeit wesentlich vereinfacht und eine Robustheit des Verfahrens gegenüber Störeinflüssen steigt.

Der vorbestimmte Stromwert kann von einer Betriebsspannung des laufenden Elektromotors abhängig sein. Dadurch können Betriebszustände berücksichtigt werden, in denen nicht die volle nominelle Betriebsspannung zum Betrieb des Elektromotors zur Verfügung steht, wie sie beispielsweise an Bord eines Kraftfahrzeugs auftreten können.

Wurde eine Schwergängigkeit erfasst, so kann der Elektromotor permanent abgeschaltet werden, um einen weitergehenden Schaden zu vermeiden. Alternativ oder zusätzlich kann ein Signal ausgegeben werden, das beispielsweise an eine Bedienperson weitergeleitet oder in einem Fehlerspeicher abgelegt wird.

Auf der Basis von zurückliegenden Zeitpunkten des Erhöhens des Stromwerts kann ein Zeitpunkt abschätzbar sein, zu dem der Stromwert den Maximalwert übersteigt, so dass eine Schwergängigkeit des Elektromotors bestimmt wird. Eine Dringlichkeit einer Instandsetzungsmaßnahme am Elektromotor kann daraus abgeleitet und ausgegeben werden.

Übersteigt die Stromaufnahme des Elektromotors einen größten anzunehmenden Stromwert, kann eine Blockade des Elektromotors bestimmt werden. So kann eine Bestimmung einer Blockade zusätzlich implementiert bzw. eine bereits implementierte Blockadebestimmung um die Bestimmung der Schwergängigkeit erweitert werden.

In einer Variante ist das Verfahren als Computerprogrammprodukt mit Programmcodemitteln zur Durchführung des Verfahrens auf einem computerlesbaren Datenträger abgespeichert oder es läuft auf einer Ausführungseinrichtung ab. Ist die Ausführungseinrichtung programmierbar, so kann das Verfahren kostengünstig in einer bestehenden Steuereinrichtung nachgerüstet werden, welche die Ausführungseinrichtung umfasst.

Eine erfindungsgemäße Steuervorrichtung für einen Elektromotor umfasst eine Steuereinrichtung zum Abschalten des Elektromotors, falls eine Stromaufnahme des laufenden Elektromotors einen vorbestimmten Stromwert übersteigt, eine Bestimmungseinrichtung zur Bestimmung einer Abfallgeschwindigkeit der Drehzahl des Elektromotors nach dem Abschalten des Elektromotors und eine Verarbeitungseinrichtung, die dazu eingerichtet ist, den Stromwert zu erhöhen, falls die Abfallgeschwindigkeit unterhalb eines vorbestimmten Schwellenwerts liegt, und eine Schwergängigkeit des Elektromotors zu bestimmen, falls die Abfallgeschwindigkeit den vorbestimmten Schwellenwerte übersteigt.

Die Erfindung wird nun mit Bezug auf die beigefügten Figuren genauer beschrieben, in denen:
- Fig. 1: eine Anordnung mit einem Elektromotor und einer Steuervorrichtung;
- Fig. 2: ein Ablaufdiagramm eines Verfahrens zur Steuerung des Elektromotors aus Fig. 1; und
- Fig. 3: Kennlinien an der Steuervorrichtung aus Fig. 1
darstellt.

### Genaue Beschreibung von Ausführungsbeispielen

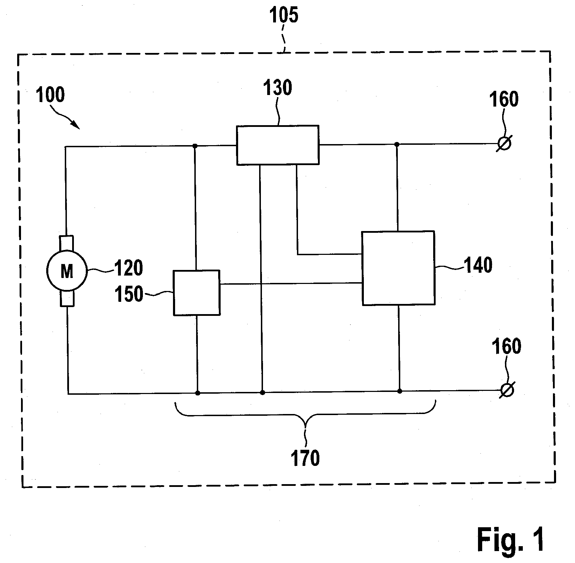

Fig. 1 zeigt eine Anordnung 100 an Bord eines Kraftfahrzeugs 110. Die Anordnung 100 umfasst einen Elektromotor 120, eine Steuereinrichtung 130, eine Verarbeitungseinrichtung 140, eine Bestimmungseinrichtung 150 und zwei Betriebsspannungsanschlüsse 160. Die Steuereinrichtung 130, die Verarbeitungseinrichtung 140 und die Bestimmungseinrichtung 150 bilden gemeinsam eine Steuervorrichtung 170. Die Verarbeitungseinrichtung 140 kann einen externen Steuereingang umfassen und die Anordnung 100 kann in einem integrierten Elektromotor ausgeführt sein.

Zwischen den Betriebsspannungsanschlüssen 160 liegt eine Betriebsspannung an, die zur Speisung des Elektromotors 120 und zum Betrieb der Steuervorrichtung 170 verwendet wird. Die Betriebsspannung beträgt üblicherweise nominell ca. 12 V und kann in der Praxis stark variieren, bei einer üblichen 12-Anlage etwa im Bereich zwischen ca. 8 und 16 V, gelegentliche Extremwerte können zwischen ca. 2 und 18 V liegen. Bei 24 V- Anlagen können die Spannungen im Extremfall zwischen 0 V und 30 V variieren. Die Verarbeitungseinrichtung 140 ist mit beiden Betriebsspannungsanschlüssen 160 verbunden. Ferner ist die Verarbeitungseinrichtung 140 mit der Steuereinrichtung 130 und der Bestimmungseinrichtung 150 verbunden. Die Steuereinrichtung 130 weist ebenfalls Verbindungen zu beiden Betriebsspannungsanschlüssen 160 auf. Ferner verfügt die Steuereinrichtung 130 über einen Ausgang, der mit dem Elektromotor 120 verbunden ist, wobei der zweite Anschluss des Elektromotors 120 mit dem unteren Betriebsspannungsanschluss 160 verbunden ist. Die Bestimmungseinrichtung 150 ist unmittelbar mit beiden Anschlüssen des Elektromotors 120 verbunden.

Die Verarbeitungseinrichtung 140 kann in Form eines Mikrocomputers aufgebaut sein. Schnittstellenbausteine zwischen dem Mikrocomputer und der Steuereinrichtung 130 bzw. der Bestimmungseinrichtung 150 sind nicht dargestellt und können Digital-Analog-Wandler und Analog-Digital-Wandler umfassen. Alternativ dazu kann die Verarbeitungseinrichtung 140 in Form von fest verdrahteter Logik analog und/oder digital aufgebaut sein.

Die Steuereinrichtung 130 umfasst einen steuerbaren Schalter zum selektiven elektrischen Verbinden des oberen Betriebsspannungsanschlusses 160 mit dem oberen Anschluss des Elektromotors 120. Durch Steuern des Schalters kann der Elektromotor 120 ein- und ausgeschaltet werden. Der Schalter kann beispielsweise in Form eines Relais oder eines Transistors, vorzugsweise eines Feldeffekttransistors (FET), ausgeführt sein. Über ein Bauteil der Steuereinrichtung 130, das im Strompfad des Elektromotors 120 zwischen den Betriebsspannungsanschlüssen 160 liegt, kann eine Spannung abgegriffen werden, die zu einer Stromaufnahme des Elektromotors 120 proportional ist. Ein solches Bauteil kann beispielsweise ein Shunt-Widerstand, der Transistor oder ein Stanzgitter sein, welches aus fertigungstechnischen Gründen von der Steuereinrichtung 130 umfasst ist und einen bekannten elektrischen Widerstand aufweist.

Anstelle der beschriebenen Verschaltung der Steuereinrichtung 130 als High-Side-Switch, der den Elektromotor 120 selektiv mit einem positiven Anschluss der Betriebsspannung verbindet, kann auch ein Low-Side-Switch verwendet werden, bei dem ein Anschluss des Elektromotors mit dem positiven Anschluss der Betriebsspannung verbunden bleibt und der andere Anschluss durch die Steuereinrichtung selektiv mit dem negativen Anschluss der Betriebsspannung (Masse) verbunden wird.

Die Bestimmungseinrichtung 150 bestimmt auf der Basis einer an den Anschlüssen des Elektromotors 120 anliegenden Spannung einen Drehzahlverlauf des Elektromotors 120. In einer bevorzugten Ausführungsform werden Drehzahlen des Elektromotors 120 nicht absolut bestimmt, sondern Spannungswerte am Elektromotor 120 zu vorbestimmten Zeitpunkten voneinander subtrahiert, um eine Ableitung der Drehzahl des Elektromotors 120 nach der Zeit zu erhalten. Der Drehzahlverlauf des Elektromotors 120 wird mit der Bestimmungseinrichtung 150 üblicherweise erst dann bestimmt, wenn der Elektromotor 120 abgeschaltet ist, d.h., wenn die Steuereinrichtung 130 eine hochohmige Verbindung zwischen dem oberen Betriebsspannungsanschluss 160 und dem oberen Anschluss des Motors 120 bewirkt.

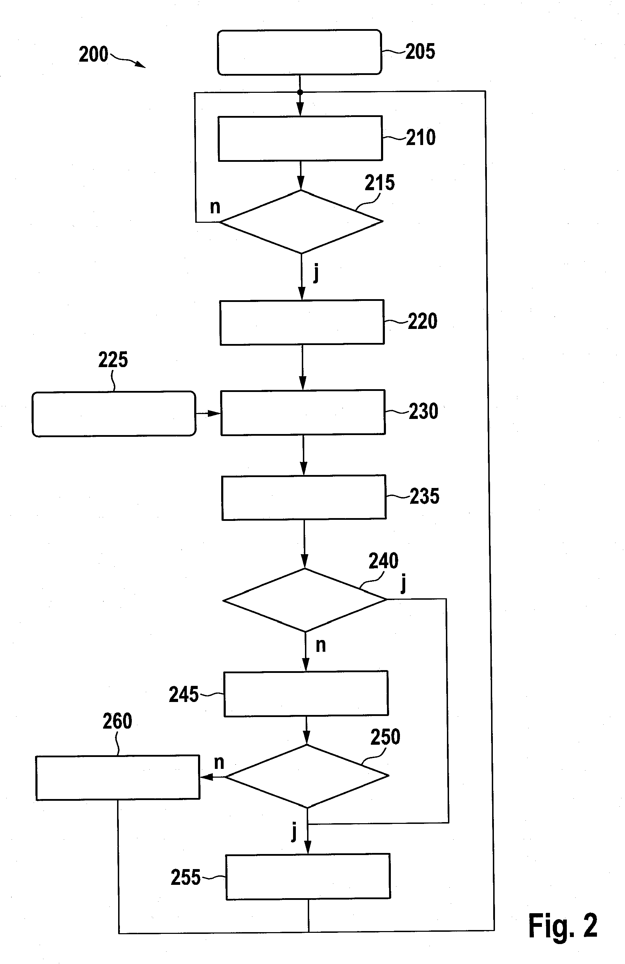

Fig. 2 zeigt ein Ablaufdiagramm eines Verfahrens 200 zur Steuerung des Elektromotors 120 in der Anordnung 100 aus Fig. 1. Das Verfahren 200 umfasst Schritte bzw. Zustände 205 bis 265.

Im Schritt 205 befindet sich das Verfahren 200 im Startzustand. Danach wird in Schritt 210 die Stromaufnahme des Elektromotors 120 bestimmt. Anschließend wird in Schritt 215 bestimmt, ob die bestimmte Stromaufnahme einen vorbestimmten Stromwert übersteigt. Ist dies nicht der Fall, so kehrt das Verfahren 200 zum Schritt 215 zurück. Übersteigt die Stromaufnahme den Stromwert, so wird der Elektromotor 120 im Schritt 220 abgeschaltet. Optional kann in Schritt 215 auch ein Vergleich mit einem größten anzunehmenden Stromwert durchgeführt werden, dessen Überschreiten zu einem Erkennen einer Blockade und zum sofortigen Abschalten des Elektromotors 120 führt.

Außer durch den beschriebenen Verfahrensteil der Schritte 210 bis 220 kann das Abschalten auch extern begründet sein, wie durch den Schritt 225 angedeutet ist. Beispielsweise kann der Elektromotor 120 einen Lüfter eines Radiators an Bord eines Kraftfahrzeugs antreiben, wobei der Betrieb des Elektromotors 120 von der Temperatur des Radiators abhängig ist. Das im Schritt 225 extern veranlasste Abschalten kann durch eine entsprechend gefallene Temperatur im Radiator begründet sein.

Die folgenden Schritte 230 bis 260 sind relativ unabhängig von den vorausgehenden Schritten 210 bis 225, so dass das Verfahren 200 auch in Form zweier miteinander gekoppelter Teilverfahren ablaufen kann. Gegebenenfalls können die Teilverfahren auf unterschiedlichen Ausführungseinrichtungen ablaufen.

Im Schritt 230 wird die vom abgeschalteten Elektromotor 120 generierte Spannung abgetastet. Um den Elektromotor 120 nicht durch eine elektrische Last abzubremsen, wird die Bestimmung mittels der Bestimmungseinrichtung 150 möglichst hochohmig durchgeführt. Das Abtasten wird in vorbestimmten Zeitintervallen wiederholt. Ist eine vorbestimmte Anzahl Abtastungen durchgeführt worden oder unterschreitet die abgetastete Spannung einen vorbestimmten Wert, so kann die Auslaufgeschwindigkeit bzw. Abfallgeschwindigkeit der Drehzahl des Elektromotors 120 im Schritt 235 bestimmt werden.

Dazu wird bestimmt, nach welcher Zeit Differenzen zwischen bestimmten Spannungen ein vorbestimmtes Maß bzw. einen vorbestimmten Schwellenwert überschreiten. Die Drehzahl des Elektromotors 120 fällt üblicherweise in Form einer umgekehrten Exponentialfunktion gegen Null ab. Durch Bilden der besagten Differenzen wird eine diskrete Ableitung der Drehzahl des Elektromotors 120 nach der Zeit bestimmt, die der Auslaufgeschwindigkeit des Elektromotors 120 entspricht. Je stärker der Elektromotor 120 abgebremst wird, beispielsweise durch schwergängige Lager, desto eher erreicht er den Stillstand und desto eher liegt die Änderungsgeschwindigkeit der Spannungen über dem vorbestimmten Schwellenwert.

Im Schritt 240 wird überprüft, ob die bestimmte Auslaufgeschwindigkeit einen vorbestimmten Schwellenwert übersteigt. Ist das der Fall, so wird der Zustand des Elektromotors 120 im Schritt 255 als schwergängig befunden.

Wird im Schritt 240 jedoch bestimmt, dass die bestimmte Auslaufgeschwindigkeit den Schwellenwert nicht übersteigt, so wird zunächst auf eine ungenaue Messung geschlossen und im Schritt 245 der Stromwert, mit dem die Stromaufnahme des Elektromotors 120 in Schritt 210 verglichen wird, um einen Betrag erhöht.

In Schritt 250 wird bestimmt, ob der Stromwert einen vorbestimmten maximalen Stromwert erreicht bzw. überschritten hat. Ist dies der Fall, so wird in Schritt 255 die Schwergängigkeit des Elektromotors 120 bestimmt. Andernfalls wird im optionalen Schritt 260 ein Signal bereitgestellt, das auf eine sich anbahnende Schwergängigkeit des Elektromotors hinweist. Gegebenenfalls wird auch auf der Basis von Zeitpunkten zurückliegender Erhöhungen des Stromwerts im Schritt 245 eine Prognose erstellt, wie viel Betriebszeit dem Elektromotor 120 verbleibt, bis er für schwergängig befunden wird. Im Rahmen des Schritts 255 kann der als schwergängig erkannte Elektromotor 120 auch stillgelegt werden. Die Stilllegung kann für einen vorbestimmten Zeitraum, etwa um ein Abkühlen des Elektromotors in günstigere Betriebsbedinungen zu ermöglichen, oder dauerhaft erfolgen.

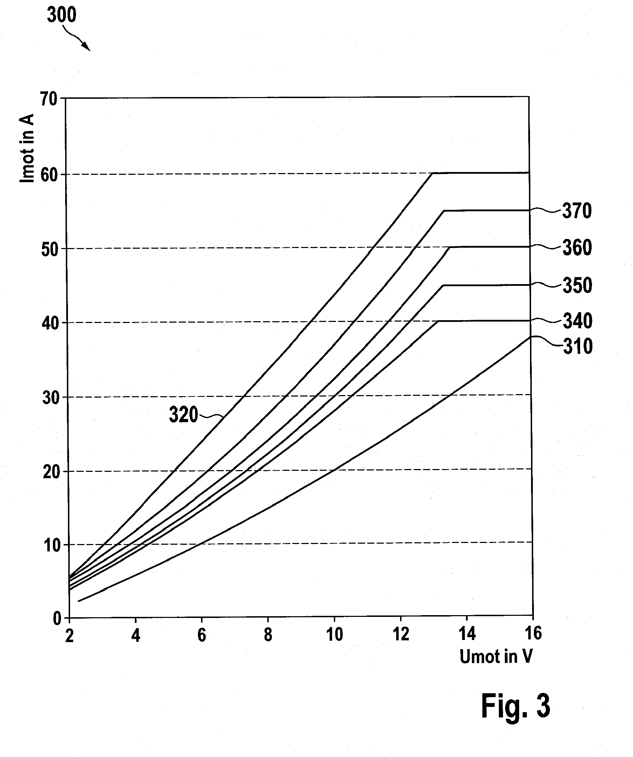

Fig. 3 zeigt ein Diagramm 300 mit Kennlinien bezüglich der Anordnung 100 bzw. des Verfahrens 200. In einer horizontalen Richtung ist eine Motorspannung des Elektromotors 120 aus Fig. 1 zwischen 2 und 16 V angetragen. Die Motorspannung ergibt sich am Elektromotor 120 durch hochfrequentes Ein- und Ausschalten der Betriebsspannung mittels der Steuereinrichtung 130 aus Fig. 1 in einem vorbestimmten Tastverhältnis, so dass die Motorspannung stets kleiner oder gleich groß wie die Betriebsspannung ist. In einer vertikalen Richtung ist eine Stromaufnahme des Elektromotors 120 im Bereich zwischen 0 und 70 A angetragen. Die im Folgenden gezeigten Zahlenbeispiele sind rein exemplarischer Natur und können an einen vorgegebenen Elektromotor 120 angepasst werden, ohne die Anordnung 100 oder das Verfahren 200 substanziell zu verändern.

Eine erste Kennlinie 310 zeigt einen Zusammenhang zwischen einer am Elektromotor 120 anliegenden Betriebsspannung und einer dabei durch den leichtgängigen Elektromotor 120 verursachten Stromaufnahme. Dabei wird von einem nicht schwergängigen Elektromotor 120 und einer fehlerfreien Messung ausgegangen.

Eine zweite Kennlinie 320 zeigt eine maximal zulässige Stromaufnahme des Elektromotors 120 in Abhängigkeit von der Motorspannung. Wird der Elektromotor 120 im laufenden Betrieb so weit abgebremst, dass seine Stromaufnahme oberhalb des durch die zweite Kennlinie 320 definierten Wertes liegt, so wird der Elektromotor 120 abgeschaltet.

Weitere Kennlinien 340 bis 370 zeigen unterschiedliche Schwellenwerte zur Erkennung der Schwergängigkeit des Elektromotors 120. Zunächst ist die Kennlinie 340 maßgeblich. Übersteigt der Strom durch den Elektromotor 120 die Kennlinie 340, so wird zunächst von einem Messfehler ausgegangen und die nächst höhere Kennlinie 350 aktiviert. Bei weiteren Überschreitungen der jeweils aktiven Kennlinie 340-370 wird die nächsthöhere Kennlinie aktiviert, wobei auf die Kennlinie 370 die Kennlinie 320 folgt. Übersteigt der Strom durch den Elektromotor 120 auch die Kennlinie 320, so wird der Elektromotor 120 dauerhaft abgeschaltet.

## Patentansprüche

1. Verfahren (200) zur Bestimmung einer Schwergängigkeit eines Elektromotors (120), folgende Schritte umfassend:
- Abschalten (220) des Elektromotors (120), falls eine Stromaufnahme des laufenden Elektromotors (120) einen vorbestimmten Stromwert übersteigt;
- Bestimmen (235) einer Abfallgeschwindigkeit der Drehzahl des Elektromotors (120);
- Erhöhen (245) des Stromwerts um einen Betrag, falls die Abfallgeschwindigkeit unterhalb eines vorbestimmten Schwellenwerts liegt; und
- Bestimmen (255) der Schwergängigkeit des Elektromotors (120), falls die Abfallgeschwindigkeit den vorbestimmten Schwellenwert übersteigt.

2. Verfahren (200) nach Anspruch 1, ferner umfassend ein Bestimmen (225) eines externen Abschaltens des Elektromotors (120)

3. Verfahren (200) nach Anspruch 1 oder 2, wobei die Abfallgeschwindigkeit auf der Basis eines Verlaufs einer durch den Elektromotor (120) generierten Spannung (235) bestimmt wird.

4. Verfahren (200) nach einem der vorangehenden Ansprüche, wobei die Abfallgeschwindigkeit auf der Basis einer Differenz zeitlich beabstandeter Werte bestimmt wird, die auf die Drehzahl des Elektromotors (120) hinweisen.

5. Verfahren (200) nach einem der vorangehenden Ansprüche, wobei der vorbestimmte Stromwert auf der Basis einer Betriebsspannung des laufenden Elektromotors (120) bestimmt wird.

6. Verfahren (200) nach einem der vorangehenden Ansprüche, wobei der Stromwert nur bis zu einem vorbestimmten Maximalwert erhöht wird.

7. Verfahren (200) nach Anspruch 6, ferner umfassend ein Abschätzen (260) eines Zeitpunkts, an dem der Stromwert den Maximalwert übersteigt, auf der Basis von zurückliegenden Zeitpunkten des Erhöhens (245) des Stromwerts.

8. Verfahren (200) nach einem der vorangehenden Ansprüche, ferner umfassend ein Erfassen (215) einer Blockade des Elektromotors (120), falls der Stromwert einen größten anzunehmenden Stromwert übersteigt.

9. Computerprogrammprodukt mit Programmcodemitteln zur Durchführung des Verfahrens nach einem der vorangehenden Ansprüche, wenn das Computerprogrammprodukt auf einem computerlesbaren Datenträger abgespeichert ist oder auf einer Ausführungseinrichtung (140) abläuft.

10. Steuervorrichtung (170) für einen Elektromotor (120), folgende Elemente umfassend:
- eine Steuereinrichtung (130) zum Abschalten des Elektromotors (120), falls eine Stromaufnahme des laufenden Elektromotors (120) einen vorbestimmten Stromwert übersteigt;
- eine Bestimmungseinrichtung (150) zur Bestimmung einer Abfallgeschwindigkeit der Drehzahl des Elektromotors (120); und
- eine Verarbeitungseinrichtung (140), die dazu eingerichtet ist, den Stromwert zu erhöhen, falls die Abfallgeschwindigkeit unterhalb eines vorbestimmten Schwellenwerts liegt, und eine Schwergängigkeit des Elektromotors (120) zu bestimmen, falls die Abfallgeschwindigkeit den vorbestimmten Schwellenwert übersteigt.

## Claims

1. Method (200) for determining running difficulties of an electric motor (120), said method comprising the following steps:
- disconnection (220) of the electric motor (120) if a current draw of the running electric motor (120) exceeds a predetermined current value;
- determination (235) of a rate of fall of the rotational speed of the electric motor (120);
- increasing (245) of the current value by a magnitude if the rate of fall is below a predetermined threshold value; and
- determination (255) of the running difficulties of the electric motor (120) if the rate of fall exceeds the predetermined threshold value.

2. Method (200) according to Claim 1, further comprising determination (225) of an external disconnection of the electric motor (120).

3. Method (200) according to Claim 1 or 2, wherein the rate of fall is determined on the basis of a profile of a voltage (235) generated by the electric motor (120).

4. Method (200) according to one of the preceding claims, wherein the rate of fall is determined on the basis of a difference of values, which are spaced apart in terms of time, which values indicate the rotational speed of the electric motor (120).

5. Method (200) according to one of the preceding claims, wherein the predetermined current value is determined on the basis of an operating voltage of the running electric motor (120).

6. Method (200) according to one of the preceding claims, wherein the current value is increased only up to a predetermined maximum value.

7. Method (200) according to Claim 6, further comprising estimation (260) of a time at which the current value exceeds the maximum value on the basis of recent times of the increasing (245) of the current value.

8. Method (200) according to one of the preceding claims, further comprising detection (215) of a blocking of the electric motor (120) if the current value exceeds a largest conceivable current value.

9. Computer program product comprising program code means for carrying out the method according to one of the preceding claims when the computer program product is stored on a computer-readable data carrier or is run on an execution device (140).

10. Control apparatus (170) for an electric motor (120), said control apparatus comprising the following elements:
- a control device (130) for disconnecting the electric motor (120) if a current draw of the running electric motor (120) exceeds a predetermined current value;
- a determination device (150) for determining a rate of fall of the rotational speed of the electric motor (120); and
- a processing device (140), which is configured to increase the current value if the rate of fall is below a predetermined threshold value, and to determine running difficulties of the electric motor (120) if the rate of fall exceeds the predetermined threshold value.

## Revendications

1. Procédé (200) de détermination de la difficulté de mouvement d'un moteur électrique (120), comprenant les étapes suivantes :
- mise hors circuit (220) du moteur électrique (120) dans le cas où un courant absorbé du moteur électrique (120) en fonctionnement dépasse une valeur de courant prédéfinie ;
- détermination (235) d'une rapidité de chute de la vitesse de rotation du moteur électrique (120) ;
- augmentation (245) de la valeur du courant d'une amplitude donnée dans le cas où la rapidité de chute devient inférieure à une valeur de seuil prédéfinie ; et
- détermination (255) de la difficulté de mouvement du moteur électrique (120) dans le cas où la rapidité de chute devient supérieure à la valeur de seuil prédéfinie.

2. Procédé (200) selon la revendication 1, comprenant en outre une détermination (225) d'une mise hors circuit externe du moteur électrique (120).

3. Procédé (200) selon la revendication 1 ou 2, la rapidité de chute est déterminée sur la base d'une courbe d'une tension (235) générée par le moteur électrique (120).

4. Procédé (200) selon l'une des revendications précédentes, la rapidité de chute est déterminée sur la base d'une différence entre des valeurs espacées dans le temps, lesquelles renvoient sur la vitesse de rotation du moteur électrique (120).

5. Procédé (200) selon l'une des revendications précédentes, la valeur du courant prédéfinie étant déterminée sur la base d'une tension de service du moteur électrique (120) en fonctionnement.

6. Procédé (200) selon l'une des revendications précédentes, la valeur du courant n'étant augmentée que jusqu'à une valeur maximale prédéfinie.

7. Procédé (200) selon la revendication 6, comprenant en outre une estimation (260) d'un instant auquel la valeur du courant dépasse la valeur maximale sur la base d'instants précédents de l'augmentation (245) de la valeur du courant.

8. Procédé (200) selon l'une des revendications précédentes, comprenant en outre une détection (215) d'un blocage du moteur électrique (120) dans le cas où la valeur du courant dépasse une valeur de courant maximale pouvant être adoptée.

9. Produit de programme informatique comprenant des moyens de code de programme pour mettre en oeuvre le procédé selon l'une des revendications précédentes lorsque le produit de programme informatique est enregistré sur un support de données lisible par ordinateur ou exécuté sur un dispositif d'exécution (140) .

10. Arrangement de commande (170) pour un moteur électrique (120), comprenant les éléments suivants :
- un dispositif de commande (130) destiné à mettre hors circuit le moteur électrique (120) dans le cas où un courant absorbé du moteur électrique (120) en fonctionnement dépasse une valeur de courant prédéfinie ;
- un dispositif de détermination (150) destiné à déterminer une rapidité de chute de la vitesse de rotation du moteur électrique (120) ; et
- un dispositif de traitement (140) qui est conçu pour augmenter la valeur du courant dans le cas où la rapidité de chute devient inférieure à une valeur de seuil prédéfinie, et pour déterminer une difficulté de mouvement du moteur électrique (120) dans le cas où la rapidité de chute devient supérieure à la valeur de seuil prédéfinie.
